# EUROPEAN PATENT SPECIFICATION

(11) **EP 2 922 186 B1**
(45) Date of publication and mention of the grant of the patent: **30.05.2018**
(21) Application number: 12888551.4
(22) Date of filing: 19.11.2012
(51) Int. Cl.: H02K 13/02

(54) **ROTOR FOR ROTATING ELECTRICAL MACHINE AND METHOD FOR MANUFACTURING SAME**
ROTOR FÜR EINE ELEKTRISCHE DREHMASCHINE UND HERSTELLUNGSVERFAHREN DAFÜR
ROTOR POUR UNE MACHINE ÉLECTRIQUE ROTATIVE ET PROCÉDÉ PERMETTANT DE FABRIQUER CE DERNIER

(43) Date of publication of application: 23.09.2015
(73) Proprietor: Mitsubishi Electric Corporation, Tokyo 100-8310 (JP)
(72) Inventor: MORITA, Ryuzo, Tokyo 100-8310 (JP)
(74) Representative: Hoffmann Eitle
(86) International application number: PCT/JP2012/079911
(87) International publication number: WO 2014/076833

(56) References cited:
- FR-A1- 2 613 880
- JP-A- H0 240 883
- JP-A- H0 240 884
- JP-A- S63 234 860
- JP-B2- 4 422 162

## Description

### TECHNICAL FIELD

The present invention relates to a method according to the preamble of claim 1 for manufacturing a rotor for vehicle alternators and/or motors mounted on vehicles and the like as rotating electrical machines, and in particular relates to molding a slip ring assembly attached to the rotor. A method of the preamble of claim 1 is already known from patent document 3, namely JP 02040884 A.

### BACKGROUND ART

A conventional slip ring assembly provided on a rotor of a vehicle alternator is configured including cylindrical slip rings; electrically-connecting elements that connect the slip rings with ends of the rotor winding; and link elements that link the slip rings with the electrically-connecting elements, with those molded with a plastic material. In order to accurately position the electrically-connecting elements during the molding process, circular through-holes are made at the portions of the electrically-connecting elements exposed out of the mold portion, which serve to work in concert with fixed or movable means inside the mold portion. (See Patent document 1, for example.)

Moreover, there has also been proposed another assembly in which pins provided in a lower molding die are made to go through similar positioning holes, and portions in the vicinity of the holes are pressingly held from both sides by the lower and upper molding dies, thereby fixing radially-extending portions. (See Patent document 2, for example.)

Both conductive members of Patent documents 1 and 2 described above (conductive elements of Patent document 1 and terminals 8 and 9 of Patent document 2) are configured almost covered with resin, a plastic material, excluding portions connected with winding ends of the rotor of the alternator (electrically-connecting elements 14a and 14b of Patent document 1 and lead wire connection section 10 of Patent document 2). This connecting section is preferably formed at least in a hook shape in order to receive the rotor winding ends, which is therefore provided by bending a piece cut out from a sheet material.

As described above, members that are embedded inside the resin and only ends of which are exposed from it are extremely difficult to be stably bent as long as a chuck portion is not particularly provided. There is no securing for the resin to withstand the chuck when it is bent; if cracks and the like occur, isolation of the embedded conductive members cannot be guaranteed, thereby deteriorating product reliability. Consequently, from a bending sequence point of view, the conductive members are bent in advance and then placed in the molding die before they are resin-molded, but not after resin-molded together with the slip rings.

### PRIOR ART DOCUMENT

### Patent document

Patent document 1: JP 3622118 B2
Patent document 2: JP 4422162
Patent document 3: JP 02040884 A
Patent document 4: FR 2 613 880 A1.

### DISCLOSURE OF THE INVENTION

### Problem to be solved by the invention

In both of the conventional slip ring assemblies described above, the positioning holes are made on respective straight lines connecting the link elements with electrically-connecting elements; therefore, the connecting elements (connection points with the winding) will structurally become more distant from the rotation axis.

In other words, the closer constituent parts incorporated in a rotor are disposed to the axis, the less those parts undergo centrifugal force; therefore, a problem with the conventional assemblies has been that durability of the electrically-connecting elements cannot be enhanced.

Moreover, the positioning parts are through-holes, which will consequently create "fragile portions" in the vicinity of the foot of the connection points with the winding; therefore, when those assemblies are used as a slip ring assembly for a vehicle alternator that is mounted on a vehicle and undergoes vibration at all times, their fragility against vibration also causes a problem.

It is also conceivable as a countermeasure for that, for example, to provide so small through-holes that the terminals do not become fragile; however in this case, the pins of the lower molding die that go through the through-holes become further smaller and easy to chip off, thereby decreasing the lifetime of the molding die and deteriorating productivity, so that this cannot be easily put into practical use.

The the present invention has been made to resolve the foregoing problem, and aims at obtaining a rotor for a rotating electrical machine provided with a slip ring assembly and a manufacturing method therefor, in which the electrically-connecting elements can be certainly held in a predetermined arrangement when resin-molded, and in addition, reliability and durability of the slip ring assembly can be enhanced without creating any fragile portion that affects the electrically-connecting elements nor increasing centrifugal force the electrically-connecting elements undergo.

### Means for solving the problem

The invention is defined by independent method claim 1.

### Advantage of the invention

According to a method for manufacturing the same of the present invention, the electrically-connecting elements can be certainly held in a predetermined arrangement when resin-molded, and in addition, there is no fragile portion that affects the electrically-connecting elements and centrifugal force the electrically-connecting elements undergo will not increase; therefore, a slip ring assembly with enhanced reliability and durability can be obtained.

Moreover, a die for resin-molding can be easily fabricated and is less likely to be damaged, so that the lifetime of the die and productivity can be prevented from deteriorating.

The foregoing and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a cross sectional view showing the structure of a rotor for a rotating electrical machine according to Embodiment 1 of the present invention;
FIG. 2 is a perspective view showing the structure of the rotor in FIG. 1;
FIG. 3 is a side perspective view of a slip ring assembly provided on the rotor in FIG. 1, viewed from the right-hand side of FIG. 1;
FIG. 4 is a cross sectional view along the line IV-IV in FIG. 3;
FIG. 5 is a perspective view of a terminal to help understand a bent state of the terminal according to Embodiment 1 of the present invention;
FIG. 6 is a cross sectional view showing a state of the slip ring assembly according to Embodiment 1 of the present invention being molded by molding dies;
FIG. 7 is a main-part-enlarged perspective view showing an example of the lower molding die in FIG. 6; and
FIG. 8 is a main-part-enlarged view of FIG. 6.

### BEST MODE FOR CARRYING OUT THE INVENTION

Hereinafter, the embodiment of the present invention will be explained using accompanied drawings. Additionally, the same reference numerals represent the same or corresponding parts in each drawing.

### Embodiment 1.

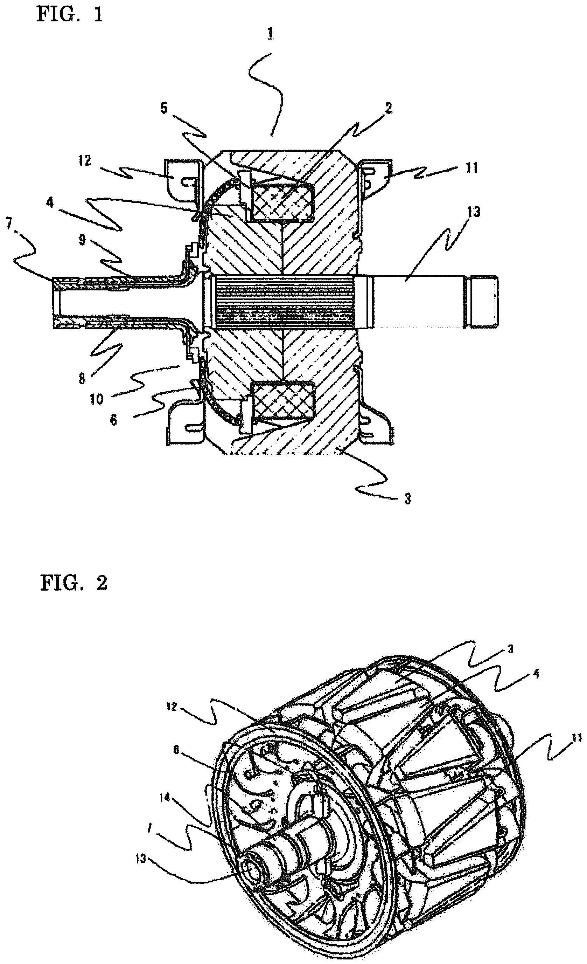

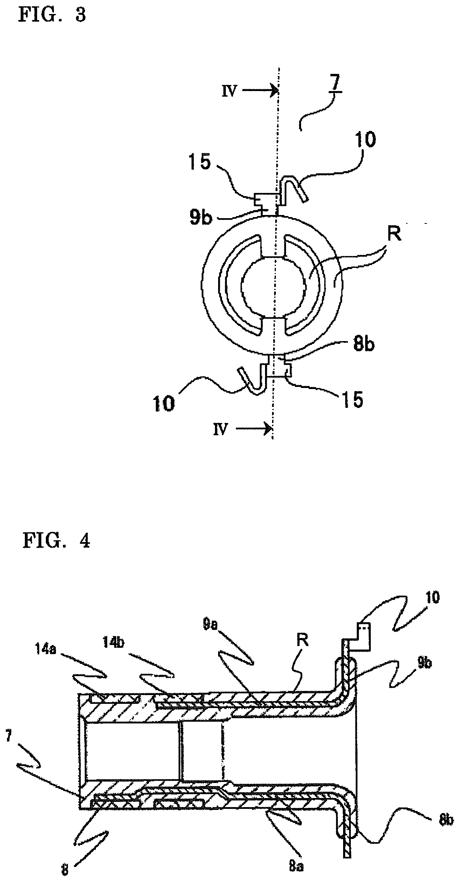

FIG. 1 is a cross sectional view showing the structure of a rotor for a rotating electrical machine according to Embodiment 1 of the present invention; FIG. 2 is a perspective view showing the structure of the rotor in FIG. 1; and FIG. 3 is a side perspective view of a slip ring assembly provided on the rotor in FIG. 1, viewed from the right-hand side of FIG. 1.

In FIG. 1 to FIG. 3, the rotor 1 of the rotating electrical machine includes a magnetic field coil 2 that generates magnetic flux, and a magnetic field core incorporating a first magnetic field core 3 and a second magnetic field core 4 that are provided as covering this magnetic field coil 2 and have claw-shaped magnetic poles set to mesh alternately with each other; the magnetic field coil 2 is wound around an insulating bobbin 5.

Lead wires 6 led out from the magnetic field coil 2 are led from lead-wire-holding portions provided on a flange of the insulating bobbin 5, extend along the exterior of the second magnetic field core 4, and are connected, via a winding (lead wire) connection section 10, to respective terminals 8 and 9 constituting a slip ring assembly 7. The lead wires 6 each are clamped at the winding connection section 10 described later and energized with electrodes (not shown) pressed to both sides of the wires, so as to melt away the insulating layer of the wires using heat generated by electric resistance, whereby the lead wires 6 are electrically connected to the terminals 8 and 9.

Moreover, cooling fans 11 and 12 are firmly fixed to the rotor 1, and a shaft 13 for rotating the rotor 1 is also provided.

The slip ring assembly 7 includes slip rings 14a and 14b that are arranged side by side in an axial direction as shown in the cross sectional view of FIG. 4 and supply, via brushes (not shown), to the magnetic field coil 2 a field current from the outside, and the terminals 8 and 9 that connect these slip rings 14a and 14b with the lead wires 6, and these are integrally molded with resin R, thereby forming the slip ring assembly 7.

The terminals 8 and 9 include link element portions 8a and 9a extending along the axis of the rotor 1 and radially-extending portions 8b and 9b extending in a radial direction, respectively. On an end of each of the link element portions 8a and 9a is formed a connection section for connecting those with the slip rings 14a and 14b, respectively, and on the other end of each of the radially-extending portions 8b and 9b is formed the winding connection section 10.

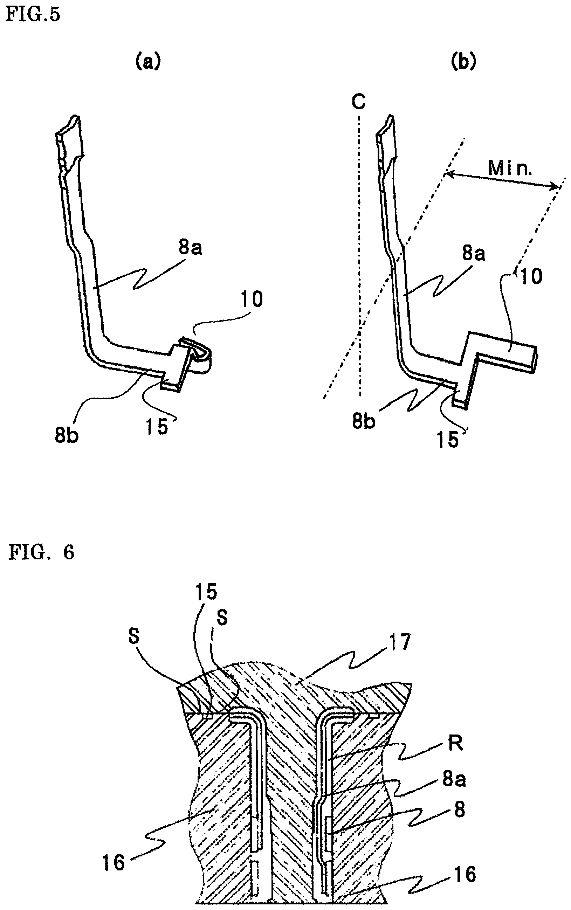

FIG. 5 is a perspective view of one of the terminals 8 and 9 to help understand a state of the terminal being bent; FIG. 5(a) is a perspective view showing the winding connection section 10 after being bent; and FIG. 5(b) is a perspective view showing the same before bent.

As shown in FIG. 5(a) and FIG. 5(b), the terminals 8 and 9 are formed in such a way that a sheet material is punched into a predetermined shape, and following that, the link element portions 8a and 9a and the winding connection section 10 are bent. Usually, the terminals are partially bent as shown in FIG. 5 and connected with the slip rings 14a and 14b, following that, radially-extending portions 8b and 9b and the winding connection section 10 are bent, and the terminals are placed in a molding die and then molded. FIG. 6 is a cross sectional view showing a state of the slip ring assembly 7 being molded using molding dies.

In this Embodiment 1, a positioning section 15 that serves to fix the terminal position when molded with the resin is provided, as shown in FIG. 5, in a position circumferentially adjacent to the winding connection section 10.

According to the terminals of Embodiment 1 configured as described above, the winding connection section 10 can be brought close to the rotation axis (broken line C in FIG. 5(b)), compared to the conventional examples, by a distance equivalent to the space where the positioning holes have been made and arranged, that is, the winding connection section can be disposed at a minimum distance Min from the axis, so that durability can be enhanced.

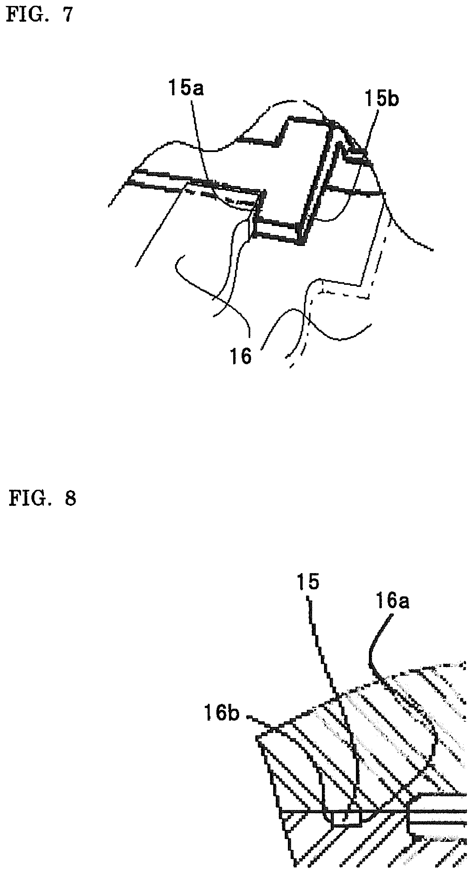

As shown in FIG. 6 to FIG. 8, since a radially inner side surface 15a and a radially outer side surface 15b of the positioning section 15 are held, when molded, by side surfaces 16a and 16b of a stepwise section of a lower molding die, respectively, the winding connection section 10 is placed in an accurate position, so that its displacement can be prevented from occurring during the molding.

Additionally, the numeral 17 in FIG. 6 represents an upper molding die and the symbol S, a sealing part.

The stepwise section of the molding die can be formed in various ways. As long as at least the radially inner side surface and radially outer side surface are held with respect to the rotation axis, various formations, such as that the stepwise section is partially formed in the upper molding die, and the abutting surface between the upper and lower molding dies is formed within the thickness of the sheet, would be possible.

Anyway, the formations of the stepwise section are very simple, so it is easy to fabricate the molding dies, compared to those using conventional pins, and the dies are less likely to be damaged; therefore, the lifetime thereof will not be deteriorated.

The poisoning section 15 is provided as protruding opposite the winding connection section 10 at the end of each of the radially-extending portions 8b and 9b of the terminals 8 and 9, respectively. Thereby, the winding connection section 10 can be disposed close to where it extends outwardly from the resin R of the slip ring assembly 7, maintaining the minimum distance from the rotation axis, so that resistance to centrifugal force will not be deteriorated.

Additionally, the foregoing radially inner side surface 15a and radially outer side surface 15b of the positioning section 15 only have to be provided in a certain range, and in addition, the side surfaces do not need to be formed in a linear shape, but can be suitably formed in, for example, a convex or concave arc shape.

As described above, a rotor for a rotating electrical machine according to Embodiment 1 of the present invention comprises a magnetic field coil that generates magnetic flux; a plurality of slip rings that supply to the magnetic field coil a field current from outside the rotor; and terminals that connect the slip rings with the magnetic field coil; wherein the terminals each include a link element portion extending in a rotation axis direction and a radially-extending portion extending in a radial direction, and at an end of the radially-extending portion are provided a winding connection section connected with a lead wire of the magnetic field coil and a positioning section that is provided circumferentially adjacently to the winding connection section and serves for positioning when molded. Therefore, the electrically-connecting elements can be certainly held in a predetermined arrangement when resin-molded, and in addition, there is no fragile portion that affects the electrically-connecting elements, and centrifugal force the electrically-connecting elements undergo will not be increased, so that a slip ring assembly with enhanced reliability and durability can be obtained.

Furthermore, dies for the resin-molding can be easily fabricated and are less likely to be damaged, so that the lifetime of the dies and productivity can be prevented from deteriorating.

### INDUSTRIAL APPLICABILITY

The present invention can be preferably applied to a slip ring assembly attached to a rotor for vehicle alternators and/or motors.

### DESCRIPTION OF THE REFERENCE NUMERALS

1: rotor
2: magnetic field coil
3, 4: magnetic field core
5: insulating bobbin
6: lead wires
7: slip ring assembly
8, 9: terminal
8a, 9a: link element portion
8b, 9b: radially-extending portion
10: winding connection section
14, 14a, 14b: slip ring
15: positioning section
15a: radially inner side surface
15b: radially outer side surface
16: lower molding die
16a, 16b: side surface of lower molding die stepwise section
17: upper molding die

## Claims

1. A method for manufacturing a rotor (1) for a rotating electrical machine, the rotor (1) comprising:
a magnetic field coil (2) that generates magnetic flux;
a plurality of slip rings (14, 14a, 14b) that supply to the magnetic field coil (2) a field current from outside the rotor (1); and
terminals (8, 9) that connect the slip rings (14, 14a, 14b) with the magnetic field coil (2); wherein
the terminals (8, 9) each include a link element portion (8a, 9a) extending in a rotation axis direction and a radially-extending portion (8b, 9b) extending in a radial direction, and at an end of the radially-extending portion (8b, 9b) are provided a winding connection section (10) connected with a lead wire of the magnetic field coil (2), and
a positioning section (15) that is provided circumferentially adjacently to the winding connection section (10) and serves for positioning when molded,
wherein the positioning section (15) is formed in a protruding shape and provided with a radially inner side surface (15a) and a radially outer side surface (15b), wherein a slip ring assembly (7) is manufactured by integrally molding with resin (R) said terminals (8, 9) and said slip rings (14a, 14b) in a molding die (17),
**characterized in that**
the radially inner side surface (15a) and the radially outer side surface (15b) of the positioning section (15) are held by side surfaces of a stepwise section (16a, 16b) provided in the molding die (16) during molding.

2. The method according to claim 1, wherein the winding connection section (10) adjacent to the positioning section (15) is formed at a minimum distance from the rotation axis.

## Patentansprüche

1. Verfahren zur Herstellung eines Rotors (1) für eine elektrische Rotationsmaschine, wobei der Rotor (1) umfasst:
eine Magnetfeldspule (2), die einen magnetischen Fluss erzeugt;
eine Vielzahl an Schleifringen (14, 14a, 14b), die der Magnetfeldspule (2) von außerhalb des Rotors (1) einen Feldstrom zuführen; und
Anschlussklemmen (8, 9), welche die Schleifringe (14, 14a, 14b) mit der Magnetfeldspule (2) verbinden; wobei
die Anschlussklemmen (8, 9) jeweils einen Verbindungselementabschnitt (8a, 9a), welcher sich in einer Rotationsachsenrichtung erstreckt, und einen Radialerstreckungsabschnitt (8b, 9b), der sich in einer radialen Richtung erstreckt, aufweisen, und an einem Ende des Radialerstreckungsabschnitts (8b, 9b) sind ein Wicklungsverbindungsabschnitt (10) mit einem Leitungsdraht, welcher mit der Magnetfeldspule (2) verbunden ist, und
ein Positionierungsbereich (15), der umlaufend benachbart zu dem Wicklungsverbindungsabschnitt (10) vorgesehen ist und zur Positionierung beim Formen dient, vorgesehen,
wobei der Positionierungsbereich (15) in einer vorstehenden Form ausgebildet ist und mit einer radialen Innenseitenfläche (15a) und einer radialen Außenseitenfläche (15b) versehen ist, wobei eine Schleifringanordnung (7) durch integrales Formen der Anschlussklemmen (8, 9) und der Schleifringe (14a, 14b) mit Harz (R) in einem Formwerkzeug (17) hergestellt ist,
**dadurch gekennzeichnet, dass**
die radiale Innenseitenfläche (15a) und die radiale Außenseitenfläche (15b) des Positionierungsbereichs (15) durch Seitenflächen eines Stufenabschnitts (16a, 16b), der in dem Formwerkzeug (16) vorgesehen ist, während des Formens gehalten werden.

2. Verfahren nach Anspruch 1, wobei der zu dem Positionierungsbereich (15) benachbarte Wicklungsverbindungsabschnitt (10) in einem minimalen Abstand von der Drehachse ausgebildet ist.

## Revendications

1. Procédé de fabrication d'un rotor (1) pour une machine électrique rotative, le rotor (1) comprenant :
une bobine de champ magnétique (2) qui génère un flux magnétique ;
une pluralité de bagues collectrices (14, 14a, 14b) qui fournissent à la bobine de champ magnétique (2) un courant de champ depuis l'extérieur du rotor (1) ; et
des bornes (8, 9) qui raccordent les bagues collectrices (14, 14a, 14b) à la bobine de champ magnétique (2) ; dans lequel
les bornes (8, 9) incluent chacune une partie d'élément de liaison (8a, 9a) s'étendant dans une direction de l'axe de rotation et une partie s'étendant radialement (8b, 9b) s'étendant dans une direction radiale, et sont pourvues, à une extrémité de la partie s'étendant radialement (8b, 9b), d'une section de raccord d'enroulement (10) raccordée à un fil conducteur de la bobine de champ magnétique (2), et
une section de positionnement (15) qui est prévue circonférentiellement de manière adjacente à la section de raccord d'enroulement (10) et sert pour le positionnement lorsqu'elle est moulée,
dans lequel la section de positionnement (15) est formée selon une forme en saillie et pourvue d'une surface latérale radialement interne (15a) et d'une surface latérale radialement externe (15b), dans lequel un ensemble de bagues collectrices (7) est fabriqué par moulage intégral avec de la résine (R) desdites bornes (8, 9) et desdites bagues collectrices (14a, 14b) dans une matrice de moulage (17),
**caractérisé en ce que**
la surface latérale radialement interne (15a) et la surface latérale radialement externe (15b) de la section de positionnement (15) sont maintenues par les surfaces latérales d'une section en gradin (16a, 16b) prévue dans la matrice de moulage (16) pendant le moulage.

2. Procédé selon la revendication 1, dans lequel la section de raccord d'enroulement (10) adjacente à la section de positionnement (15) est formée à une distance minimale de l'axe de rotation.
